(19) **Europäisches Patentamt**
**European Patent Office**
**Office européen des brevets**

(11) Veröffentlichungsnummer: **0 356 895**
**A2**

(12) **EUROPÄISCHE PATENTANMELDUNG**

(21) Anmeldenummer: **89115524.4**

(51) Int. Cl.⁵: **B29C 65/20**

(22) Anmeldetag: **23.08.89**

(30) Priorität: **27.08.88 DE 8810848 U**

(43) Veröffentlichungstag der Anmeldung:
**07.03.90 Patentblatt 90/10**

(84) Benannte Vertragsstaaten:
**AT BE CH DE ES FR GB GR IT LI LU NL SE**

(71) Anmelder: **Bienek, Günter**
**Wilhelm-Leuschner-Strasse 35**
**D-5500 Trier(DE)**

(72) Erfinder: **Bienek, Günter**
**Wilhelm-Leuschner-Strasse 35**
**D-5500 Trier(DE)**

(74) Vertreter: **Schönherr, Wolfgang et al**
**Patentanwälte Wolfgang Schönherr Dipl.-Ing.**
**Karl-Heinz Serwe Hawstrasse 28**
**D-5500 Trier(DE)**

(54) **Schweissgerät zum Verbinden der Enden zweier Bänder aus thermoplastischem Material.**

(57) Bei einem Schweißgerät zum Verbinden der Enden zweier Bänder aus thermoplastischem Material, das aus einem Arbeitstisch mit einer quer zur Laufrichtung der Werkstoffbahnen angeordneten Schlitzöffnung und einem in die Schlitzöffnung einfahrbaren Schweißschwert besteht, ist das Schweißschwert parallel zu seiner waagerechten Unterkante höhenverstellbar an einem Halteständer angeordnet. Das Schweißschwert, das vorteilhaft zur Seite schwenkbar ist, ist am Ende zweier parallel zueiander angeordneten Haltestangen drehbar angeordnet, wobei das andere Ende der beiden Haltestangen drehbar an einem lotrechten Ständer gelagert ist. Beidseitig der Schweißschwertoberkante ist je ein Heizstab in einer Hülse angeordnet, die mit dem Schweißschwert fest verbunden ist.

Fig. 1

EP 0 356 895 A2

## Schweißgerät zum Verbinden der Enden zweier Bänder aus thermoplastischem Material

Die Erfindung betrifft ein Schweißgerät zum Verbinden der Enden zweier Bänder aus thermoplastischem Material, das aus einem Arbeitstisch mit einer quer zur Laufrichtung der Werkstoffbahnen angeordneten Schlitzöffnung und einem in die Schlitzöffnung einfahrbaren Schweißschwert, das an seiner Oberkante mit einem Heizstab verbunden ist, besteht.

Schweißgeräte zum Verbinden der Enden zweier Bänder sind bekannt. Bei einem Schweißderät der bekannten Art ist das Schweißschwert einseitig hochschwenkbar gelagert, so daß es zum Schweißen heruntergeschwenkt werden kann, während das Schweißschwert bei Nichtgebrauch hochgeschwenkt wird.

Bei dem bekannten Schweißgerät besteht jedoch der Nachteil, daß der Schweißvorgang über die Länge der miteinander zu verbindenden Bandenden ungleichmäßig erfolgt, da infolge der Schwenkbewegung die eine Seitenkante der Bänder eher erreicht wird als die andere.

Aufgabe der Erfindung ist es daher, ein Schweißgerät der eingangs genannten Art vorzuschlagen, bei dem der Schweißvorgang über die gesamte Länge der zu verschweißenden Bandenden gleichmäßig erfolgt.

Die Aufgabe wird dadurch gelöst, daß das Schweißschwert parallel zu seiner waagerechten Unterkante höhenverstellbar an einem Halteständer angeordnet ist.

Nach einer vorteilhaften Ausführungsform ist das Schweißschwert zur Seite schwenkbar ausgebildet.

Nach einer vorteilhaften Ausführungsform ist das Schweißschwert am Ende zweier parallel zueinander angeordneten Haltestangen drehbar angeordnet, wobei das andere Ende der beiden Haltestangen drehbar an einem lotrechten Ständer angeordnet ist. Der lotrechte Ständer ist vorteilhaft drehbar am Arbeitstisch gelagert.

Am Parallelgestänge ist vorteilhaft eine Rückholfeder angeordnet, die mit dem lotrechten Ständer verbunden ist.

Nach einer bevorzugten Ausführungsform ist beidseitig der Schweißschwerttoberkante je ein Heizstab angeordnet. Jeder Heizstab ist vorteilhaft in einer Hülse angeordnet, die mit dem Schweißschwert fest verbunden ist.

Nach einer weiteren vorteilhaften Ausführungsform sind die Heizstäbe mit einem Temperaturregler verbunden. Der Temperaturregler ist vorteilhaft in einem Gehäuse angeordnet, das mit dem Schweißschwerthalter verbunden ist, wobei das Gehäuse gegenüber dem Schweißschwert eine Wärmeisolierung aufweist.

Vorteilhaft ist am drehbaren lotrechten Ständer eine verstellbare Arretierung für die Begrenzung des Schwenkbereiches des Schweißschwertes angeordnet.

Die Erfindung ist in den Zeichnungen beispielhaft dargestellt. Es zeigen:

Fig. 1 das Schweißgerät in Seitenansicht,

Fig. 2 das SChweißgerät nach Fig. 1 in Draufsicht,

Fig. 3 das Schweißgerät mit Temperaturregler,

Fig. 4 einen Schnitt nach A-A der Fig. 3.

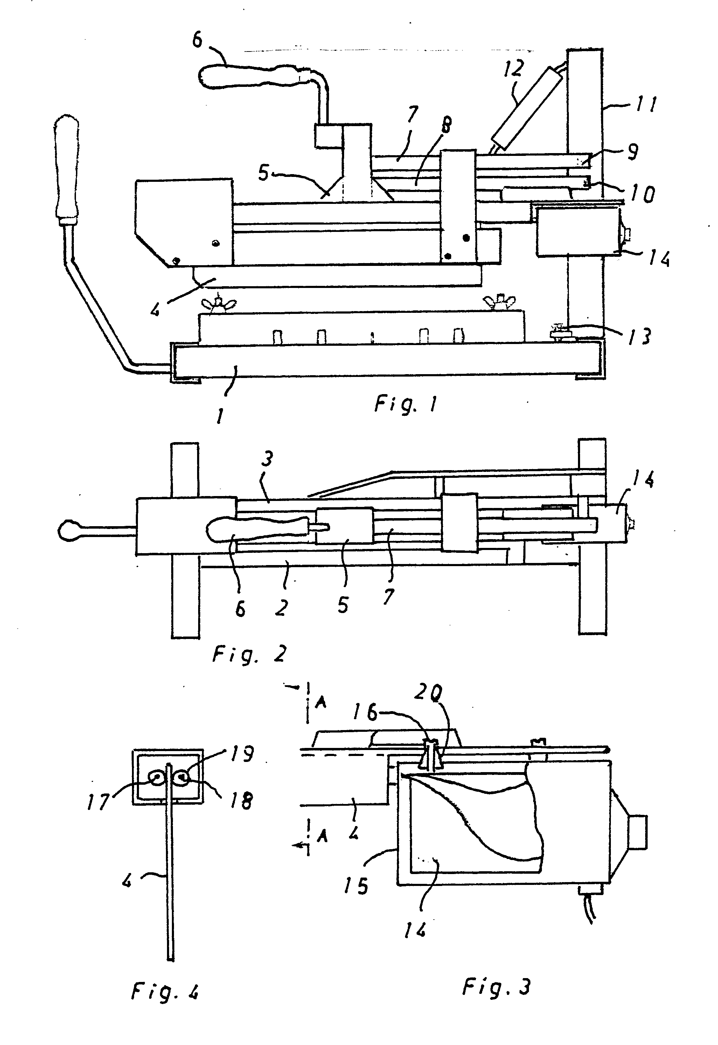

Das Schweißgerät nach den Fig. 1 und 2 besteht aus einem Arbeitstisch (1), der aus zwei im Abstand nebeneinander angeordneten Tragholmen (2 und 3) zusammengesetzt sein kann. Der Arbeitstisch (1) weist eine Schlitzöffnung auf, in die ein Schweißschwert (4) einfahrbar ist.

Das Schweißschwert (4) ist an einer Tragvorrichtung (5) mit Griff (6) angeordnet. An der Tragvorrichtung (5) sind zwei im Abstand etwa parallel zueinander angeordnete Haltestangen (7 und 8) darüber angelenkt, deren andere Enden (9 und 10) ebenfalls drehbar an dem lotrechten Ständer (11) gelagert sind. Der lotrechte Ständer (11) ist mit seinem unteren Ende am Arbeitstisch drehbar gelagert, so daß die Tragvorrichtung (5) mit dem Schweißschwert (4) seitlich ausschwenkbar ist. Am Parallelgestänge (7, 8) befindet sich eine Rückholfeder (12), deren anderes Ende mit dem lotrechten Ständer (11) verbunden ist.

Durch Druck auf den Griff (6) läßt sich die Tragvorrichtung (5) und damit das Schweißschwert (4) in den Schlitz des Arbeitstisches (1) absenken, wobei durch die Parallelanordnung der Stangen (7 und 8) die untere Kante des Schweißschwertes (4) in paralleler Stellung verfahrbar ist.

Um die Schwenkbewegung des lotrechten Ständers zu begrenzen, ist eine verstellbare Arretierschraube (13) am Ständer angeordnet. Am Ende des Schweißschwertes (4) ist ein Temperaturregler (14) angeordnet, dessen Gehäuse (15) wärmeisoliert ist. Hierzu sind die Befestigungsschrauben (16) in einer wärmeisolierenden Hülle (20) aus Teflon, Keramik od. dgl. angeordnet. Dies ist erforderlich, da die Schweißtemperatur 380˚ betragen kann, während der Regler nur eine Temperatur bis 70˚ störungsfrei annehmen kann.

Wie in Fig. 4 erkennbar, hat das Schweißgerät (4) an seiner oberen Kante beidseitig je einen Heizstab (17 und 18). Jeder Heizstab ist in eine Hülse (19) einsteckbar, die mit der Schweißschwertoberkante verschweißt ist.

Durch die beidseitige Anordnung von Heizstäben wird erreicht, daß das Schweißschwert keine

2

einseitige Krümmung erfährt, wenn es unter Hitzeeinwirkung steht.

**Ansprüche**

1. Schweißgerät zum Verbinden der Enden zweier Bänder aus thermoplastischem Material, bestehend aus einem Arbeitstisch mit einer quer zur Laufrichtung der Werkstoffbahnen angeordneten Schlitzöffnung und einem in die Schlitzöffnung einfahrbaren Schweißschwert, das an seiner Oberkante mit einem Heizstab verbunden ist, dadurch gekennzeichnet, daß das Schweißschwert (4) parallel zu seiner waagerechten Unterkante höhenverstellbar an einem Halteständer (11) angeordnet ist.

2. Schweißgerät nach Anspruch 1, dadurch gekennzeichnet, daß das Schweißschwert (4) zur Seite schwenkbar ausgebildet ist.

3. Schweißgerät nach Anspruch 1, dadurch gekennzeichnet, daß das Schweißschwert (4) am Ende zweier parallel zueinander angeordneten Haltestangen (7, 8) drehbar angeordnet ist, wobei das andere Ende (9, 10) der beiden Haltestangen drehbar an einem lotrechten Ständer (11) angeordnet ist.

4. Schweißgerät nach einem der Ansprüche 1 bis 3, dadurch gekennzeichnet, daß der lotrechte Ständer (11) drehbar am Arbeitstisch (1) gelagert ist.

5. Schweißgerät nach einem der Ansprüche 1 bis 4, dadurch gekennzeichnet, daß am Parallelgestänge (7, 8) eine Rückholfeder (12) angeordnet ist, die mit dem lotrechten Stander (11) verbunden ist.

6. Schweißgerät nach Anspruch 1, dadurch gekennzeichnet, daß beidseitig der Schweißschwertoberkante je ein Heizstab (17, 18) angeordnet ist.

7. Schweißgerät nach Anspruch 6, dadurch gekennzeichnet, daß jeder Heizstab (17, 18) in einer Hülse (19) angeordnet ist, die mit dem Schweißschwert fest verbunden ist.

8. Schweißgerät nach Anspruch 1, dadurch gekennzeichnet, daß die Heizstäbe mit einem Temperaturregler (14) verbunden sind.

9. Schweißgerät nach Anspruch 8, dadurch gekennzeichnet, daß der Temperaturregler (14) in einem Gehäuse (15) angeordnet ist, das mit dem Schweißschwerthalter verbunden ist, wobei das Gehäuse gegenüber dem Schweißschwert eine Wärmeisolierung (20) aufweist.

10. Schweißgerät nach einem der Ansprüche 1 bis 9, dadurch gekennzeichnet, daß am drehbaren lotrechten Ständer (11) eine verstellbare Arretierung (13) angeordnet ist.

Fig. 1

Fig. 2

Fig. 4

Fig. 3